(19) **Europäisches Patentamt / European Patent Office / Office européen des brevets**

(11) **EP 3 709 257 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **20160535.9**

(22) Anmeldetag: **03.03.2020**

(51) Internationale Patentklassifikation (IPC):
**G06T 5/00** *(2006.01)* **G06T 5/10** *(2006.01)*
**G02B 21/00** *(2006.01)*

(52) Gemeinsame Patentklassifikation (CPC):
**G06T 5/002; G02B 21/008; G06T 5/10;**
G06T 2207/20024

(54) **VERFAHREN ZUR DEKONVOLUTION VON BILDDATEN**

METHOD FOR DECONVOLVING IMAGE DATA

PROCÉDÉ DE DÉCONVOLUTION DE DONNÉES D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2019 DE 102019203449**

(43) Veröffentlichungstag der Anmeldung:
**16.09.2020 Patentblatt 2020/38**

(73) Patentinhaber: **Carl Zeiss Microscopy GmbH 07745 Jena (DE)**

(72) Erfinder:
- **KALININ, Stanislav 99427 Weimar (DE)**
- **KUDRYAVTSEV, Volodymyr 07751 Jena (DE)**
- **NOVIKAU, Yauheni 99510 Apolda (DE)**

(74) Vertreter: **Meyer, Jork Carl Zeiss AG Patentabteilung Carl-Zeiss-Promenade 10 07745 Jena (DE)**

(56) Entgegenhaltungen:
- **Huff Joseph ET AL: "The Airyscan Detector from ZEISS Confocal Imaging with Improved Signal-to-Noise Ratio and Superresolution", Carl Zeiss Microscopy GmbH - Technology Note, Juli 2015 (2015-07), XP055685579, Gefunden im Internet: URL:https://web.archive.org/web/2016040509 3702/https://www.gattaquant.com/files/en_w p_airyscan-detector.pdf [gefunden am 2020-04-15]**
- **Jon Mcloone: "10 Tips for Writing Fast Mathematica Code", Wolfram Blog, 7. Dezember 2011 (2011-12-07), XP055713506, Gefunden im Internet: URL:https://web.archive.org/web/2012010720 1356/https://blog.wolfram.com/2011/12/07/1 0-tips-for-writing-fast-mathematica-code/ [gefunden am 2020-07-09]**

## EP 3 709 257 B1

**Beschreibung**

Die Erfindung betrifft ein Verfahren zur Entfaltung von Bilddaten gemäß dem Oberbegriff des Anspruchs 1.

Bei der Anwendung von Verfahren der konfokalen Mikroskopie wird eine üblicherweise als Pinhole bezeichnete Blende in einer konjugierten Bildebene eines Detektionsstrahlengangs angeordnet, wie dies beispielsweise aus der EP 1 372 011 B1 bekannt ist.

Bei der Erfassung von Bilddaten eines Objekts werden Strahlen einer Detektionsstrahlung mittels eines optischen Systems erfasst und auf einen Detektor geleitet, der hinter dem Pinhole angeordnet ist. Dabei werden die Bilddaten aufgrund optischer Eigenschaften der Elemente des optischen Systems verändert und können beispielsweise neben einem Verlust von Anteilen der Detektionsstrahlung auch ein "Verschmieren" des Orts einer die Detektionsstrahlung bewirkenden Signalquelle mit sich bringen. Zudem ist es mit üblichen optischen Systemen nicht möglich, eine punktförmige Strahlungsquelle wieder exakt als ein Punkt abzubilden, wenn dieses kleiner als die optische Auflösung des optischen Systems ist.

Die Wirkungen eines optischen Systems auf die übertragene Detektionsstrahlung kann mittels einer Punktbildübertragungsfunktion (point spread function, PSF) beschrieben werden. Diese auch als Faltung oder Konvolution (engl. convolution) bezeichnete Beeinflussung der Detektionsstrahlung, - und damit der resultierenden Bilddaten, - kann bei Kenntnis der PSF mittels einer als Entfaltung oder Dekonvolution (engl. deconvolution) bezeichneten Rechenoperation wieder aufgehoben werden.

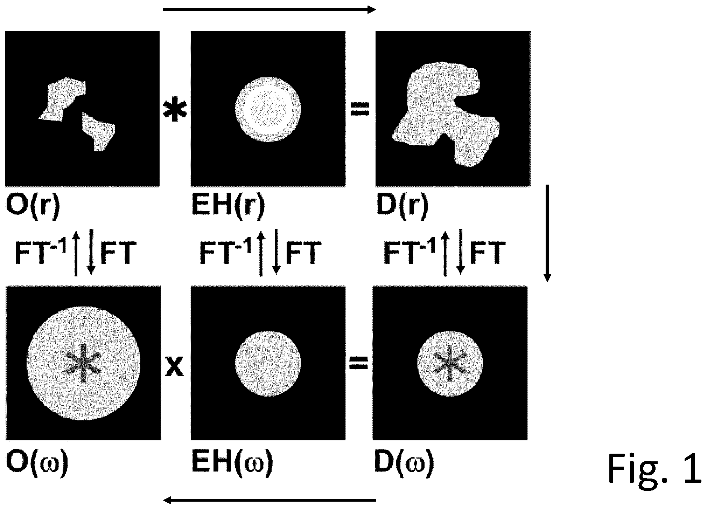

In der Fig. 1 ist schematisch der Zusammenhang der Erfassung von Bilddaten im Ortsraum O(r) der entsprechenden Punktbildübertragungsfunktion EH(r), fortan auch kurz als PSF bezeichnet, und der resultierenden Bilddaten D(r) dargestellt.

Die entsprechenden Größen im Frequenzraum sind das Objektspektrum O($\omega$), die optische Transfer Funktion EH($\omega$) sowie das Bildspektrum D($\omega$).

Mittels der Fouriertransformation FT beziehungsweise der inversen Fouriertransformation FT$^{-1}$ können die Daten beziehungsweise Funktionen von Ortsraum und Frequenzraum ineinander umgerechnet werden.

Ein mittels konfokaler Mikroskopie erhaltenes Bild ist daher das Ergebnis einer Faltung der Detektionsstrahlung entsprechend der PSF im Ortsraum (spatial domain). Zusätzlich auftretendes Rauschen [additive noise; N(r)] trägt ebenfalls zu den resultierenden Bilddaten und somit zu dem erhaltenen Bild bei und muss gegebenenfalls durch zusätzliche auswertetechnische Maßnahmen reduziert werden.

In einer Weiterentwicklung dieses Prinzips der Mikroskopie wird statt nur eines Pinholes ein Detektor mit einer Anzahl zweidimensional angeordneter Detektorelemente (Airyscandetektor) in der konjugierten Bildebene angeordnet. Dabei wirkt jedes Detektorelement für sich als ein Pinhole. Jedem Detektorelement kann dabei beispielsweise eine lichtleitende Faser oder eine andere lichtleitende Struktur vorgeordnet sein, deren Eingang in der konjugierten Bildebene liegt. Auf diesem Prinzip basiert die Airyscan-Mikroskopie (siehe z. B.: Weisshart, K. 2014; The basic principle of Airyscanning; Technology Note EN_41_013_084; Carl Zeiss Microscopy GmbH; sowie Huff, J. et al. 2015; The Airy detector from ZEISS - Confocal imaging with improved signal-to-noise ratio and superresolution; Technology Note EN_41_013_105; Carl Zeiss Microscopy GmbH).

Wird beispielsweise ein Detektor mit n = 1 oder ein Airyscandetektor mit einer Anzahl n $\geq$ 2 (i = 2, 3, 4,..., n) Detektorelemente verwendet, ergeben sich die resultierenden Bilddaten D$_i$(r) jedes einzelnen Detektorelements im Ortsraum aus:

$$\text{Gleichung (1)} \qquad D_i(r) = O(r) \otimes EH_i(r) + N(r) \ .$$

Dabei ist i ein Index von i = 1, 2, 3, ..., n. Der Term N(r) repräsentiert das Rauschen.

Im Frequenzraum gilt entsprechend die

$$\text{Gleichung (2)} \qquad D_i(\omega) = O(\omega) \cdot EH_i(\omega) + N(\omega) \ .$$

Eine Entfaltung der resultierenden Bilddaten D$_i$(r) im Frequenzraum kann erfolgen, indem die resultierenden Bilddaten D$_i$(r) inklusive Rauschen N(r) mittels einer Fouriertransformation FT in das Bildspektrum D$_i$($\omega$) überführt werden.

Um bei Nutzung einer Vielzahl von Detektorelementen eine Entfaltung der resultierenden Bilddaten (D$_i$(r) + N(r) zurück zu den Bilddaten O(r ) zu erreichen, wurde ein gewichtetes Mittel eingeführt, um das unterschiedliche Übertragungsverhalten, also die individuellen PSF, zu berücksichtigen und das Signal-zu-Rausch Verhältnis (signal-to-noise ratio; SNR) zu optimieren (siehe Gleichung 3; siehe z. B.: Weisshart, K. 2014; The basic principle of Airyscanning; Technology Note EN_41_013_084; Carl Zeiss Microscopy GmbH; sowie Huff, J. et al. 2015; The Airy detector from ZEISS - Confocal imaging with improved signal-to-noise ratio and superresolution; Technology Note EN_41_013_102;

Carl Zeiss Microscopy GmbH). Eine Entfaltung der resultierenden Bilddaten $D_i(\omega)$ aller Detektorelemente erfolgt unter Anwendung der linearen Wiener-Filterung oder Wiener-Dekonvolution gemäß

Gleichung (3):

$$O(\omega) = \frac{\sum_i^n (D_i(\omega) \cdot EH_i^*(\omega))}{w + \sum_i^n |EH_i(\omega)|^2}$$

, wobei

$O(\omega)$ = ein Objektspektrum;

$D_i(\omega)$ = ein Bildspektrum;

$EH_i^*(\omega)$= eine optische Transferfunktion (komplex konjugiert, repräsentiert Phasenkorrektur);

$EH_i(\omega)$= eine optische Transferfunktion;

n = Anzahl der Detektorelemente; und

i = ein Laufindex einer Anzahl konfokaler Strahlengänge sind.

Der Parameter w ist der Wiener-Parameter. Die Filterung nach Wiener erlaubt in bekannter Weise die Reduzierung des nachteiligen Beitrags des Rauschens. Die Filterung gemäß Gleichung 3 ist ein nicht-iterativer Prozess, das bedeutet, dass der Wiener-Parameter festgelegt wird und konstant bleibt (siehe z. B. Huff, J. et al. 2015; The Airy detector from ZEISS - Confocal imaging with improved signal-to-noise ratio and superresolution; Technology Note EN_41_013_102; Carl Zeiss Microscopy GmbH; Seite 8).

Dieses Vorgehen erfordert eine hohe Rechenleistung und entsprechend lange Rechenzeiten beziehungsweise entsprechend schnelle Prozessoren. Bei nicht optimal festgelegtem Wiener-Parameter w ist die Qualität des Resultats der Entfaltung entsprechend beeinträchtigt.

Der Erfindung liegt die Aufgabe zu Grunde, ein gegenüber den Stand der Technik verbessertes Verfahren zur Entfaltung von Bilddaten vorzuschlagen.

Die Aufgabe wird mit einem Verfahren gemäß des unabhängigen Anspruchs 1 gelöst. Vorteilhafte Weiterbildungen sind Gegenstand der abhängigen Ansprüche.

Bei Ausführung des Verfahrens zur Entfaltung von Bilddaten, werden mit einer Anzahl n konfokaler Strahlengänge und einer Anzahl n Detektorelementen oder einer Anzahl n Detektoren Bilddaten eines Objekts erfasst. Die Bilddaten werden entsprechend einer Punktbildübertragungsfunktion in resultierende Bilddaten überführt. Die so erhaltenen resultierenden Bilddaten werden dann unter Anwendung einer Entfaltungsfunktion im Frequenzraum wieder entfaltet. Die Entfaltungsfunktion bedingt dabei die Bildung mindestens einer Anzahl n Summenterme.

Die Entfaltungsfunktion beinhaltet zudem einen Wiener-Parameter w, der als Korrekturvariable zur Reduzierung des Rauschens dient.

Dieser kann in einer möglichen Ausgestaltung des Verfahrens die Form

$$w = \frac{\langle |N(\omega)|^2 \rangle}{\langle |O(\omega)|^2 \rangle}$$

aufweisen.

Dabei sind $N(\omega)$ das Rauschspektrum und $O(\omega)$ das Objektspektrum.

Erfindungsgemäß werden die Ergebnisse der Anzahl n der Terme $\sum_i^n |EH_i(\omega)|^2$ und $\sum_i^n (D_i(\omega) \cdot EH_i^*(\omega))$ (siehe Gleichung 2) wiederholt abrufbar gespeichert. Der Wiener-Parameter w wird wenigstens einmal ausgehend von einem zuvor festgelegten Ursprungswert verändert und die Entfaltung wird mittels der Entfaltungsfunktion mit dem veränderten Wiener-Parameter w ausgeführt. Dabei werden die gespeicherten Ergebnisse der Terme abgerufen und die Entfaltung unter Verwendung dieser abgerufenen Ergebnisse ausgeführt.

Die Punktbildübertragungsfunktion ist eine Eigenschaft des jeweiligen optischen Systems. Jeder der konfokalen Strahlengänge besitzt seine individuelle PSF im Ortsraum beziehungsweise seine individuelle optische Transferfunktion im Frequenzraum. Die Überführung der Bilddaten in resultierende Bilddaten anhand der PSF ist daher ein dem jeweiligen konfokalen Strahlengang inhärenter und passiver Vorgang.

Ein konfokaler Strahlengang ist beispielsweise dann gegeben, wenn ein sogenannter Airyscandetektor in einer konjugierten Bildebene in einem Detektionsstrahlengang angeordnet ist. Jeder Strahlengang zu einem Detektorelement, gegebenenfalls mit den Detektorelementen jeweils vorgeordneten Lichtleitfasern, stellt einen eigenen konfokalen Strahlengang im Sinne dieser Beschreibung dar.

Kern der Erfindung ist die Verbesserung des oben beschriebenen Entfaltungsverfahrens, indem die besonders rechenaufwändigen Schritte reduziert werden und das Entfaltungsverfahren effektiver gestaltet wird. Zusätzlich eröffnet die Erfindung die Möglichkeit, den Wiener-Parameter w im Zuge einer iterativen Annäherung effizient auszuwählen um das aus allen individuellen konfokalen Strahlengängen resultierende Rauschen besser zu berücksichtigen, als dies mit einem einmalig festgelegten Wert des Wiener-Parameters w im Stand der Technik der Fall ist.

In einer vorteilhaften Ausgestaltung des erfindungsgemäßen Verfahrens werden die Ergebnisse der rechenintensiven Terme ( $\sum_i^n (D_i(\omega) \cdot EH_i^*(\omega))$ ) und $\sum_i^n |EH_i(\omega)|^2$ einmalig ermittelt und in einer Speichereinheit als Summenterme wiederholt abrufbar abgelegt. Für eine zweite und jede weitere Iteration des Wiener-Parameters w müssen diese Summenterme nicht erneut berechnet werden. Es müssen lediglich der jeweilige Wiener-Parameter w zu dem Summenterm des Nenners addiert und der Quotient gemäß der Gleichung 3 gebildet sowie die inverse Fouriertransformation des Objektspektrums [O(r) = FT$^{-1}$(O(ω))] je Iteration ausgeführt werden.

Besonders deutlich werden die Vorteile des erfindungsgemäßen Verfahrens am Beispiel eines Airyscandetektors mit beispielsweise 32 Detektorelementen.

Die Verfahrensweise der Entfaltung nach dem Stand der Technik und unter Nutzung der Gleichung 3 bedingt Fouriertransformationen der resultierenden Bilddaten D(r) aus dem Ortsraum in den Frequenzraum: D(ω) = FT(D(r)). Für jeden konfokalen Strahlengang muss vorab die jeweilige PSF (EH$_i$(r)) ermittelt werden. Außerdem werden die optischen Transferfunktionen mittels Fouriertransformation aus der jeweiligen PSF berechnet: EH(ω) = FT(EH(r)). Daher sind für einen vorgegebenen Wiener-Parameter w insgesamt 64 Fouriertransformationen (32x FT(D(r)) und 32× FT(EH(r)) erforderlich. Zudem sind jeweils die Summenterme ( $\sum_i^n (D_i(\omega) \cdot EH_i^*(\omega))$ ) und $\sum_i^n |EH_i(\omega)|^2$ zu berechnen. Um das erhaltene Objektspektrum O(ω) wieder in die Bilddaten O(r) im Ortsraum zu überführen, ist noch eine inverse Fouriertransformation erforderlich [O(r) = FT$^{-1}$(O(ω))]. Sämtliche Berechnungen sind nach dem Stand der Technik erneut auszuführen, wenn der Wiener-Parameter w verändert wird.

In Abhängigkeit von der Anzahl n der konfokalen Strahlengänge wird die erforderliche Rechenzeit mittels des erfindungsgemäßen Verfahrens um einen Faktor von 4 bis 30 reduziert. Für ein typisches mittels eines Airyscandetektors (Airyscan) erfassten Bildes (SizeX = 2000, SizeY = 2000, SizeZ = 75) wird die Rechenzeit für jede Iteration auf wenige Sekunden reduziert. Ein optimaler Wert für den Wiener-Parameter w kann somit in effizienter Weise ermittelt werden.

Das erfindungsgemäße Verfahren erlaubt vorteilhaft eine Veränderung des Wiener-Parameters w mit geringen Rechenaufwand. Ein schrittweises Anpassen und Optimieren des Wiener-Parameters w ist ebenfalls erheblich effizienter möglich. Dieser Vorteil des erfindungsgemäßen Verfahrens zeigt sich insbesondere bei großen Datenmengen.

**Patentansprüche**

1. Verfahren zur Entfaltung von Bilddaten (D(r)),

   bei dem mit einer Anzahl n konfokaler Strahlengänge und einer Anzahl n Detektorelementen Bilddaten (O(r)) eines Objekts erfasst werden;
   die Bilddaten (O(r)) mittels einer Punktbildübertragungsfunktion (EH(r)) in resultierende Bilddaten (D(r)) überführt werden; und
   die resultierenden Bilddaten (D(r)) unter Anwendung einer Entfaltungsfunktion im Frequenzraum wieder entfaltet werden, wobei die Entfaltungsfunktion

   die Bildung mindestens einer Anzahl n von Summenterme bedingt und
   einen Wiener-Parameter w als Korrekturvariable enthält,

   und die Entfaltungsfunktion die Form

$$O(\omega) = \frac{\sum_i^n (D_i(\omega) \cdot EH_i^*(\omega))}{w + \sum_i^n |EH_i(\omega)|^2}$$

   aufweist, wobei
   O(ω) = ein Objektspektrum,
   D(ω) = ein Bildspektrum,
   EH*(ω)= eine optische Transferfunktion (komplex konjugiert),

EH$_i$(ω)= eine optische Transferfunktion,
n = Anzahl Detektorelemente und
i = ein Laufindex von 1 bis n sind;
**dadurch gekennzeichnet, dass**

die Ergebnisse der Summenterme ( $\sum_i^n (D_i(\omega) \cdot EH_i^*(\omega))$ ) und ( $\sum_i^n |EH_i(\omega)|^2$ ) abrufbar gespeichert werden;
der Wiener-Parameter w wenigstens einmal ausgehend von seinem Ursprungswert verändert wird und
die Entfaltung mittels der Entfaltungsfunktion mit dem veränderten Wiener-Parameter w und den gespeicherten Ergebnissen der Summenterme ausgeführt wird, wobei
die Anzahl n konfokaler Strahlengänge - n ≥ 2, gleich der Anzahl n von Detektorelementen ist, und die Bilddaten jedes konfokalen Strahlengangs individuell mittels jeweils einem Detektorelement erfasst werden.

2. Verfahren nach Anspruch 1, **dadurch gekennzeichnet, dass** der Wiener Parameter w die Form

$$w = \frac{\langle |N(\omega)|^2 \rangle}{\langle |O(\omega)|^2 \rangle}$$

aufweist, wobei N(w) ein Rauschspektrum darstellt.

3. Verfahren nach einem der Ansprüche 1 oder 2,
**dadurch gekennzeichnet, dass** zur Erfassung der resultierenden Bilddaten ein Detektor mit einer zweidimensionalen Anordnung einer Anzahl von Detektorelementen verwendet wird, wobei der Detektor in einer konjugierten Bildebene eines Detektionsstrahlengangs angeordnet wird.

**Claims**

1. Method for deconvolving image data (D(r)),

wherein image data (O(r)) of an object are captured with a number n of confocal beam paths and a number n of detector elements;
the image data (O(r)) are converted into resultant image data (D(r)) by means of a point spread function (EH(r)); and
the resultant image data (D(r)) are deconvolved again in the frequency domain using a deconvolution function, wherein the deconvolution function

necessitates the formation of at least a number n of sum terms and
contains a Wiener parameter *w* as correction variable,

and the deconvolution function has the form

$$O(\omega) = \frac{\sum_i^n (D_i(\omega) \cdot EH_i^*(\omega))}{w + \sum_i^n |EH_i(\omega)|^2}$$

where
O(w) = an object spectrum,
D(w) = an image spectrum,
EH* (ω)= an optical transfer function (complex conjugate),
EH$_i$(ω)= an optical transfer function,
n = a number of detector elements and
i = a running index from 1 to n;
**characterized in that**

the results of the sum terms ( $\sum_i^n\big(D_i(\omega) \cdot EH_i^*(\omega)\big)$ ) and ( $\sum_i^n |EH_i(\omega)|^2$ ) are stored in retrievable fashion;
the Wiener parameter *w* is modified at least once proceeding from its original value and
the deconvolution is carried out by means of the deconvolution function with the modified Wiener parameter *w*
and the stored results of the sum terms, wherein
the number n of confocal beam paths

  - $n \geq 2$,

is equal to the number n of detector elements, and the image data of each confocal beam path are captured
individually by means of respectively one detector element.

2. Method according to Claim 1, **characterized in that** the Wiener parameter *w* has the form

$$w = \frac{\langle |N(\omega)|^2 \rangle}{\langle |O(\omega)|^2 \rangle},$$

where $N(\omega)$ represents a noise spectrum.

3. Method according to either of Claims 1 and 2, **characterized in that** a detector with a two-dimensional arrangement
of a number of detector elements is used to capture the resultant image data, wherein the detector is disposed in
a conjugate image plane of a detection beam path.

**Revendications**

1. Procédé de déconvolution de données d'image (D(r)), avec lequel des données d'image (0(r)) d'un objet sont
acquises avec un nombre n de trajets de faisceau confocaux et un nombre n d'éléments détecteurs ;

les données d'image (O(r)) sont transférées en des données d'image résultantes (D(r)) au moyen d'une fonction
de transmission de pixels (EH(r)) ; et
les données d'image résultantes (D(r)) sont de nouveau déconvolutionnées dans l'espace de fréquences en
utilisant une fonction de déconvolution, la fonction de déconvolution
conditionnant la formation d'au moins un nombre n de termes de somme et
contenant un paramètre de Wiener w en tant que variable de correction,
et la fonction de déconvolution présentant la forme

$$O(\omega) = \frac{\sum_i^n(D_i(\omega) \cdot EH_i^*(\omega))}{w + \sum_i^n |EH_i(\omega)|^2}$$

où
O($\omega$) désigne un spectre d'objet,
D($\omega$) désigne un spectre d'image,
EH*($\omega$) désigne une fonction de transfert optique (conjuguée complexe),
EH$_i$($\omega$) désigne une fonction de transfert optique,
n désigne le nombre d'éléments détecteurs et
i désigne un indice courant de 1 à n ;
**caractérisé en ce que**

le résultat des termes de somme ( $\sum_i^n(D_i(\omega) \cdot EH_i^*(\omega))$ ) et ( $\sum_i^n |EH_i(\omega)|^2$ ) sont enregistrés de
manière consultable ;
le paramètre de Wiener w est modifié au moins une fois en partant de sa valeur initiale et
la déconvolution est exécutée au moyen de la fonction de déconvolution avec le paramètre de Wiener w modifié
et les résultats enregistrés des termes de somme,
le nombre n de trajets de faisceau confocaux

$$n \geq 2$$

étant égal au nombre n d'éléments détecteurs et les données d'image de chaque trajet de faisceau confocal étant acquises individuellement respectivement au moyen d'un élément détecteur.

2. Procédé selon la revendication 1, **caractérisé en ce que** le paramètre de Wiener w présente la forme

$$w = \frac{\langle |N(\omega)|^2 \rangle}{\langle |O(\omega)|^2 \rangle},$$

$N(\omega)$ représentant un spectre de bruit.

3. Procédé selon l'une des revendications 1 ou 2, **caractérisé en ce qu'**un détecteur ayant un arrangement bidirectionnel d'un certain nombre d'éléments détecteurs est utilisé pour acquérir les données d'image résultantes, le détecteur étant disposé dans un plan d'image conjugué d'un trajet de faisceau de détection.

O(r)       EH(r)       D(r)

$FT^{-1}$ ↑↓ FT     $FT^{-1}$ ↑↓ FT     $FT^{-1}$ ↑↓ FT

$O(\omega)$       $EH(\omega)$       $D(\omega)$

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1372011 B1

### In der Beschreibung aufgeführte Nicht-Patentliteratur

- The basic principle of Airyscanning. **WEISSHART, K.** Technology Note EN_41_013_084. Carl Zeiss Microscopy GmbH, 2014
- The Airy detector from ZEISS - Confocal imaging with improved signal-to-noise ratio and superresolution. **HUFF, J. et al.** Technology Note EN_41_013_105. Carl Zeiss Microscopy GmbH, 2015
- The Airy detector from ZEISS - Confocal imaging with improved signal-to-noise ratio and superresolution. **HUFF, J. et al.** Technology Note EN_41_013_102. Carl Zeiss Microscopy GmbH, 2015
- The Airy detector from ZEISS - Confocal imaging with improved signal-to-noise ratio and superresolution. **HUFF, J. et al.** Technology Note EN_41_013_102. Carl Zeiss Microscopy GmbH, 2015, 8